# EUROPEAN PATENT APPLICATION

(11) **EP 3 805 030 A1**
(43) Date of publication of application: **14.04.2021**
(21) Application number: 19814553.4
(22) Date of filing: 20.05.2019
(51) Int. Cl.: B60K 7/00, B60K 11/02, B62M 7/12, H02K 7/14, H02K 9/19

(54) **ELECTRIC VEHICLE AND DRIVE DEVICE FOR SAME**

(30) Priority: 07.06.2018 JP 2018109439
(71) Applicant: YAMAHA HATSUDOKI KABUSHIKI KAISHA, Iwata-shi Shizuoka 438-8501 (JP)
(72) Inventor: TERADA, Junji, Iwata-shi, Shizuoka 438-8501 (JP); ISHIKAWA, Hideki, Iwata-shi, Shizuoka 438-8501 (JP)
(74) Representative: Grünecker Patent- und Rechtsanwälte PartG mbB
(86) International application number: PCT/JP2019/019956
(87) International publication number: WO 2019/235203

(57) **Abstract**

A vehicle drive device (10, 110, 210, 310, 410, 510) includes a motor housing (40) rotatable about an axle (31, 331, 431) and containing an electric motor (30), and a coolant channel (51A, 51B, 251, 331b, 331c) located radially inward of a bearing (45) and allowing an outside of the motor housing (40) and an inside of the motor housing (40) to communicate with each other.

## Description

### Technical Field

The present invention relates to an electric vehicle and a drive device for the electric vehicle.

### Background Art

JP2012-206710A proposes a two-wheeled vehicle (two-wheeled electric vehicle of so-called in-wheel motor system) in which the electric motor for driving the rear wheel is disposed on the axle of the rear wheel. In the vehicle disclosed in JP2012-206710A, the rotor of the electric motor and the rear wheel are connected without using a reduction mechanism. This structure is referred to as the direct drive system among the in-wheel motor systems, and has the advantage that the rear wheel can be driven efficiently because no power loss is caused by the reduction mechanism.

### Summary of Invention

### Technical Problem

A stator of an electric motor emits heat when the electric motor is driven. In the structure of Patent Literature 1, the stator is fixed to the axle and is not contact with a member with high heat dissipation. As such, when the output of the electric motor increases, heat quickly accumulates in the electric motor.

One of the objects of the present disclosure is to propose a vehicle drive device and an electric vehicle capable of effectively cooling an electric motor.

### Solution to Problem

An example of an electric vehicle drive device proposed in this disclosure includes an axle; an electric motor including a rotor and a stator where the rotor rotatable about the axle, a bearing fitted radially outward of the axle, a motor housing that is supported by the axle via the bearing so as to be rotatable about the axle, is rotatable together with the rotor, and contains the electric motor, and a coolant channel located radially inward of the bearing and allowing an outside of the motor housing and an inside of the motor housing to communicate with each other through the coolant channel. The vehicle drive device can effectively cool the electric motor. The axle of the vehicle drive device may be an axle of the rear wheel or an axle of a front wheel. The vehicle equipped with the vehicle drive device may be a two-wheeled electric vehicle, an electric three-wheeled vehicle, or an electric four-wheeled vehicle.
(2) In the vehicle drive device according to (1), the coolant channel may be formed or disposed in the axle. This allows the coolant to be sent to the inside of the motor housing with a simple structure. An example of "the coolant channel is disposed in the axle" means disposing a pipe, which is used as a coolant channel, in a groove or a through hole formed in the axle.
(3) In the vehicle drive device according to (1), the axle may have a hole therethrough extending in an axial direction of the axle, or a groove formed in an outer peripheral surface of the axle and extending in the axial direction of the axle. The coolant channel may be a pipe disposed in the hole or the groove. This structure eliminates the need of connecting the channel formed in the axle to the pipe.
(4) In the vehicle drive device according to any one of (1) to (3), the coolant channel may include an annular channel extending in the circumferential direction around the axle and disposed along the stator. This structure serves to more effectively cool the electric motor.
(5) The vehicle drive device according to (4), the annular channel may be radially located on an inside of the stator. With this structure, a space inside the stator can be effectively used.
(6) The vehicle drive device according to (4) or (5), the stator may be fixed to the axle via a stator frame disposed radially inward of the stator, and the annular channel may be formed in the stator frame. This structure serves to effectively transfer heat from the stator to the coolant.
(7) The vehicle drive device according to (4) or (5), the annular channel may be a pipe extending in the circumferential direction around the axle and extending along the stator. This can simplify the structure of members for supporting the stator, such as the stator frame.
(8) In the vehicle drive device according to any one of (1) to (7), an electric cable connected to the stator may be located radially inward of the bearing in addition to the coolant channel.
(9) In the vehicle drive device according to (8), the axle may have a hole therethrough extending in an axial direction of the axle, or a groove formed in an outer peripheral surface of the axle and extending in the axial direction of the axle. The electric cable may be disposed in the hole or the groove. This allows the electric cable to be connected to the stator with a simple structure.
(10) In the vehicle drive device according to (8), the coolant channel and the electric cable may extend in the same direction from the inside of the motor housing along the axle. This structure allows the coolant channel and the electric cable to be disposed on the same side (right side or left side) of the wheel. As a result, the structure for supporting these members can be made common.
(11) In the vehicle drive device according to (10), the coolant channel may be a pipe, and the pipe and the electric cable may be disposed in a common hole or groove formed in the axle. With this structure, the axle can be easily formed compared to the case where a hole for a pipe is formed separately from a hole for an electric cable.
(12) In the vehicle drive device according to (9), the electric cable may extend from the inside of the motor housing in a direction along the axle, and the coolant channel may extend from the inside of the motor housing along the axle in a direction opposite to the electric cable. This structure serves to reduce the diameter of the hole formed on the axle.
(13) In the vehicle drive device according to any one of (1) to (12), the vehicle drive device may include a rear arm supporting the axle, at least a part of the coolant channel may be a pipe, and the rear arm may include a side housing containing the pipe. With this structure, the side housing protects the pipe.
(14) In the vehicle drive device according to (13), the axle may have a part, the part being located outside the motor housing in the direction along the axle and inside the side housing, and the coolant channel may extend through the part of the axle. This structure can prevent water and soil from entering the motor housing through the hole or the groove formed on the axle.
(15) An electric vehicle including the vehicle drive device according to any one of (1) to (14).

### Brief Description of the Drawings

FIG. 1 is a side view of an example of an electric vehicle proposed in this disclosure;
FIG. 2 is a perspective view of a vehicle drive device shown in FIG. 1;
FIG. 3A is a cross sectional view of the vehicle drive device taken along the line III-III in FIG. 1;
FIG. 3B is a side view of an electric motor and a stator frame shown in FIG. 3A;
FIG. 3C is a cross sectional view of an axle shown in FIG. 3A;
FIG. 3D is an enlarged view of FIG. 3A;
FIG. 4A is a cross-sectional view showing another example of the vehicle drive device;
FIG. 4B is a side view of the electric motor shown in FIG. 4A;
FIG. 5A is a cross sectional view showing still another example of the vehicle drive device;
FIG. 5B is a side view of the electric motor shown in FIG. 5A;
FIG. 6A is a cross sectional view showing still another example of the vehicle drive device;
FIG. 6B is a cross sectional view of the axle shown in FIG. 6A;
FIG. 7 is a cross sectional view showing still another example of the vehicle drive device; and
FIG. 8 is a cross sectional view showing still another example of the vehicle drive device.

### Description of Embodiments

In the following, examples of an electric vehicle and a vehicle drive device proposed in the present disclosure will be described. In this specification, as examples of the electric vehicle and the vehicle drive device, a two-wheeled electric vehicle 1 and a vehicle drive device 10 for driving the two-wheeled electric vehicle 1 are described. The electric vehicle may be an electric three-wheeled vehicle or an electric four-wheeled vehicle.

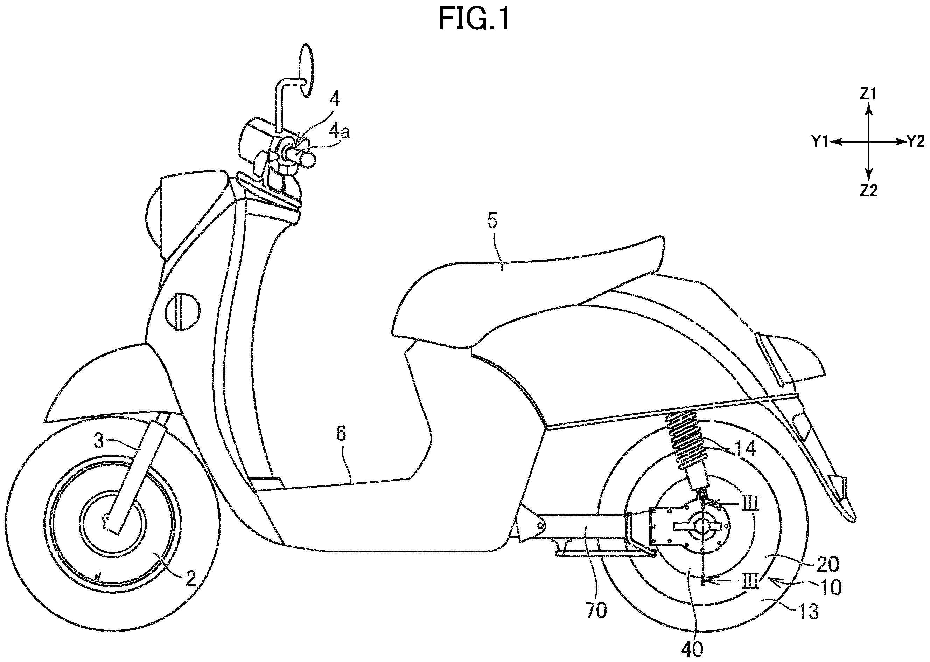

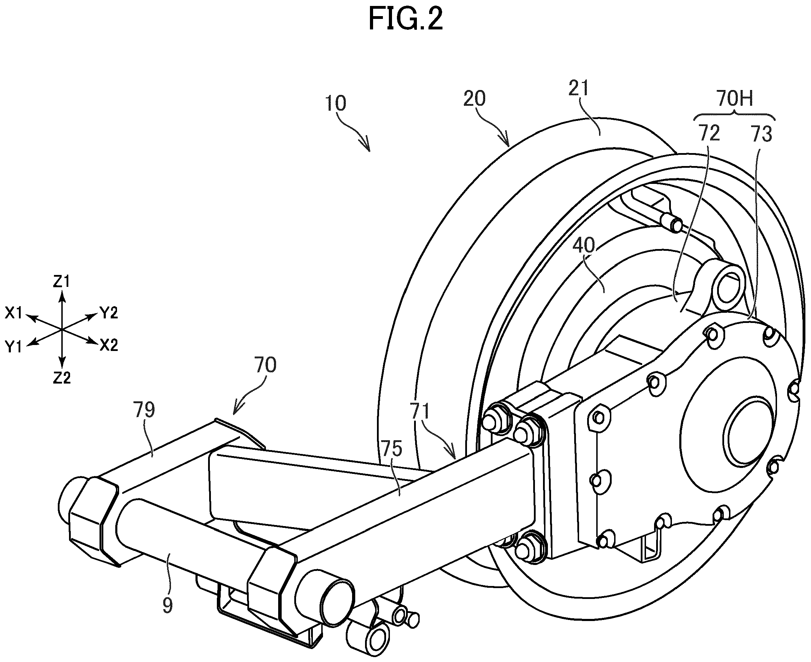

In FIGs. 1 and 2, arrows Y1 and Y2 respectively indicate forward and rearward directions, and arrows Z1 and Z2 respectively indicate upward and downward directions. A X1 direction and a X2 direction shown in FIG. 2 are respectively referred to as rightward and leftward directions.

### [Whole vehicle]

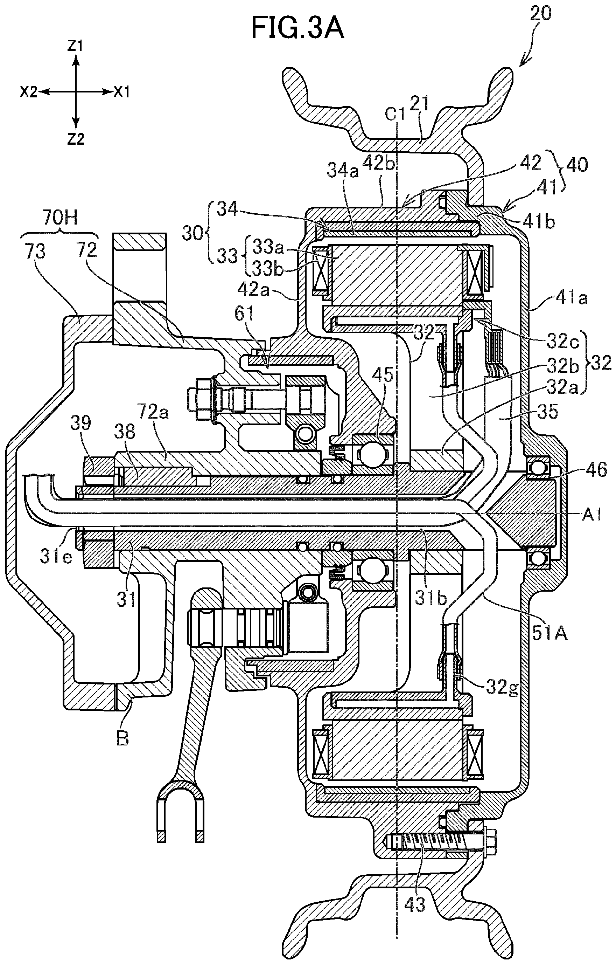

As shown in FIG. 1, the two-wheeled electric vehicle 1 has a front wheel 2, a front fork 3 supporting the front wheel 2, and a handlebar 4 connected to an upper portion of the front fork 3. Grips 4a are provided at the right and left ends of the handlebar 4. For example, one of the grips (right grip 4a) is an accelerator grip. The output of an electric motor 30 (see FIG. 3A), which will be described later, can be adjusted through the right grip 4a. A sheet 5 is positioned behind the handlebar 4. The two-wheeled electric vehicle 1 is a so-called scooter-type vehicle, and includes a space and a foot board 6 to place a rider's feet between the seat 5 and the front fork 3. The two-wheeled electric vehicle 1 may not be a scooter-type vehicle. That is, the two-wheeled electric vehicle 1 may be a vehicle that the rider can ride while holding the vehicle body between the rider's legs.

### [Rear wheel, rear arm, and rear wheel axle]

As shown in FIG. 1, the rear portion of the two-wheeled electric vehicle 1 has a rear wheel 20 and a rear arm 70 that supports the rear wheel 20 such that the rear wheel 20 can move vertically. A tire 13 is attached to the rear wheel 20. A pivot shaft 9 (see FIG. 2) is provided at the front end of the rear arm 70. The rear arm 70 is connected to the vehicle body frame via the pivot shaft 9, and can move vertically about the pivot shaft 9. The rear arm 70 supports an axle 31 (See FIG. 3A) of the rear wheel 20.

In the example of the two-wheeled electric vehicle 1, the rear arm 70 is positioned only on the one side of the right rise or the left side of the rear wheel 20 and supports the axle 31. Specifically, as shown in FIG. 2, the rear arm 70 is only positioned to the left of the rear wheel 20. This structure allows operators to easily access the electric motors 30 during maintenance work, for example, and thereby improving the maintenance work efficiency.

As shown in FIG. 2, the rear arm 70 has a left arm 71 extending rearward from the left portion of the pivot shaft 9 and a right arm 79 extending rearward from the right portion of the pivot shaft 9. The rear portion of the left arm 71 (more specifically, an arm rear member 72 described later) is disposed on the left of the rear wheel 20, and holds the axle 31 of the rear wheel 20. The rear portion of the left arm 71 has a cylindrical portion 72a, and the left portion of the axle 31 is inserted into the portion 72a (see FIG. 3A, the portion 72a is hereinafter referred to as "axle holder"). The right arm 79 is shorter than the left arm 71, and the rear end of the right arm 79 does not reach the axle 31. The structure of the rear arm 70 is not limited to the example shown in FIG. 2. For example, as will be described later, the right arm 79 and the left arm 71 may respectively hold the right and left portions of the axle 31.

As shown in FIG. 3A, the axle 31 is fitted inside the axle holder 72a of the rear arm 70 and not rotatable. For example, key grooves are formed in the outer peripheral surface of the axle 31 and the inner peripheral surface of the axle holder 72a of the rear arm 70, along the axial direction (X1 - X2) of the axle 31. A key 38 (engagement member) is fitted in these key grooves. This prevents the axle 31 from rotating relative to the axle holder 72a. A nut 39 is attached to the end of the axle 31. The nut 39 is located outward of the axle holder 72a in the axial direction, and fixes the axle holder 72a to the axle 31. More specifically, the nut 39 is located to the left of the axle holder 72a and prevents the axle holder 72a from detaching from the axle 31 to the left. The structure for fixing the axle 31 to the rear arm 70 is not limited to the example shown in FIG. 3A. In the example of the two-wheeled electric vehicle 1, pipes 51A and 51B, which function as a part of a coolant channel to be described later, are provided inside the nut 39.

### [Electric motor]

As shown in FIG. 3A, the two-wheeled electric vehicle 1 has the electric motor 30 that drives the rear wheel 20. The electric motor 30 is disposed on the axle 31, and located inside of the rear wheel 20. That is, the two-wheeled electric vehicle 1 is an in-wheel motor vehicle. The two-wheeled electric vehicle 1 has a battery (not shown) and an inverter. Direct current supplied from the battery is converted into alternating current by the inverter and supplied to the electric motor 30. The vehicle drive device 10 for driving the two-wheeled electric vehicle 1 has the rear wheel 20, the axle 31, and the electric motor 30 for driving the rear wheel 20. The rear arm 70 is also a component of the vehicle drive device 10.

As shown in FIG. 3A, the electric motor 30 has a stator 33 and a rotor 34 rotatable about an axis A1 of the axle 31. The stator 33 has a plurality of iron cores 33a disposed in the circumferential direction of the axle 31. A coil 33b is wound around each iron core 33a. The rotor 34 has a plurality of magnets 34a disposed in the circumferential direction of the axle 31. The magnets 34a are fixed to a motor housing 40, which functions as a hub of the rear wheel 20 and is described later, and rotates integrally with the motor housing 40 and the rear wheel 20. In the example of the vehicle drive device 10, the rotor 34 is located radially outward of the axle 31 with respect to the stator 33 and radially opposed to the stator 33. That is, the electric motor 30 is a radial gap electric motor. Unlike the example of the two-wheeled electric vehicle 1, the electric motor 30 may be an axial gap electric motor in which the stator 33 and the rotor 34 are opposed to each other in the axial direction of the axle 31 (X1-X2 direction).

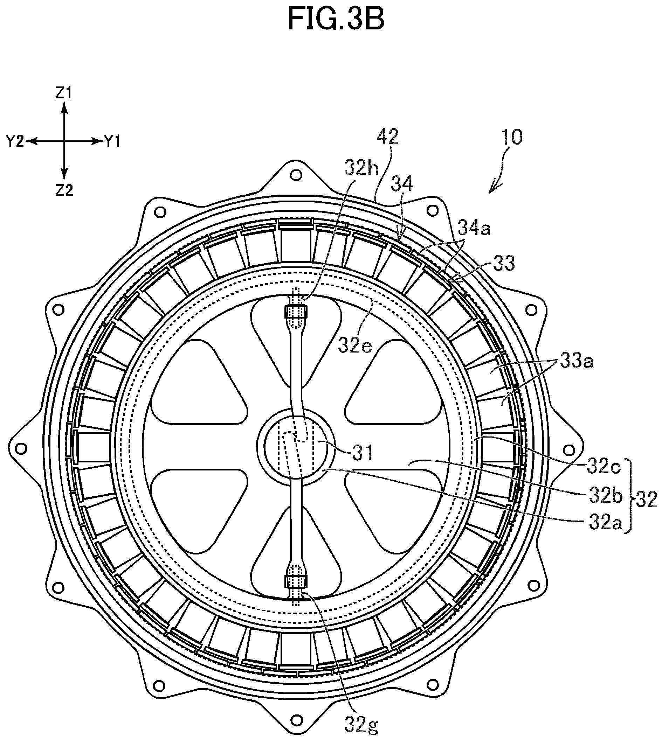

As shown in FIG. 3B, the stator 33 is supported by a stator frame 32 fixed to the axle 31. In other words, the stator 33 is fixed to the axle 31 via the stator frame 32.

As shown in FIG. 3B, the stator frame 32 has a cylindrical inner fixing portion 32a on radially inside of the stator frame 32. The axle 31 is fitted into the inner fixing portion 32a, and the inner fixing portion 32a is fixed to the axle 31. The inner fixing portion 32a is, for example, welded to the outer peripheral surface of the axle 31. The stator frame 32 has a connecting portion 32b extending radially outward from the inner fixing portion 32a.

As shown in FIG. 3A, the stator frame 32 has an annular stator mounting portion 32c, which is centered on the axis A1 of the axle 31, on radially outside of the stator frame 32. The stator mounting portion 32c is fixed to the connecting portion 32b, and is connected to the inner fixing portion 32a via the connecting portion 32b. The stator 33 is fixed to the stator mounting portion 32c. More specifically, the plurality of iron cores 33a are fixed to the outer peripheral surface of the stator mounting portion 32c. The iron cores 33a are, for example, welded to the outer peripheral surface of stator mounting portion 32c. The stator frame 32 is formed of metal, such as iron and aluminum. In the stator mounting portion 32c, an annular channel 32e, which is a part of the coolant channel described later, is formed.

### [Motor housing and its supporting structure]

As shown in FIG. 3A, the vehicle drive device 10 has the motor housing 40 containing the electric motor 30. The motor housing 40 has a right housing 41 covering the right side of the electric motor 30 and a left housing 42 covering the left side of the electric motor 30. The right housing 41 and the left housing 42 are fixed to each other in the left-right direction. For example, the housings 41 and 42 are fixed to each other by screws. The magnets 34a of the rotor 34 are fixed to the inner peripheral surface of the motor housing 40 (left housing 42 in the example of the vehicle drive device 10). The housings 41 and 42 are members each formed integrally. That is, in the example of the vehicle drive device 10, the motor housing 40 is formed of two members. Unlike the example of the vehicle drive device 10, the motor housing 40 may be formed of three members.

In the example of the vehicle drive device 10, a rim 21 and the motor housing 40 of the rear wheel 20 are separately formed members. As shown in FIG. 3A, the rim 21 is attached to the outside of the motor housing 40 by a fixing tool 43 such as a screw and a bolt. As such, the rear wheel 20 can be removed from the motor housing 40. Unlike the example of the vehicle drive device 10, the motor housing 40 may be formed as a part of the rear wheel 20. For example, one of the right housing 41 and the left housing 42 may be formed integrally with the rear wheel 20.

As shown in FIG. 3A, the bearings 45 and 46 are fitted to the axle 31. The motor housing 40 is supported by the axle 31 via the bearings 45 and 46, and the rear wheel 20 and the motor housing 40 integrally rotates around the axle 31.

An opening through which the axle 31 extends is formed on a left wall 42a of the left housing 42. The bearing 45 is disposed between the inner peripheral surface of the opening and the axle 31. The bearing 46 is fitted to the end of the axle 31 (the right end of the axle 31 in the example of the two-wheeled electric vehicle 1). A right wall 41a of the right housing 41 has a recess, and the bearing 46 is disposed inside the recess. The axle 31 does not penetrate the right housing 41. The right wall 41a is a wall located rightward of the electric motor 30. The left wall 42a is a wall located leftward of the electric motor 30.

The right housing 41 has an outer peripheral portion 41b formed on the outer peripheral edge of the right wall 41a. The left housing 42 has an outer peripheral portion 42b, which is formed on the outer peripheral edge of the left wall 42a and surrounds the electric motor 30. The magnets 34a are fixed to the inner surface of the outer peripheral portion 42b. The outer peripheral portion 42b of the left housing 42 and the outer peripheral portion 41b of the right housing 41 are fixed to each other.

### [Overview of coolant channel]

The vehicle drive device 10 has a coolant channel for sending coolant inside the motor housing 40. The coolant channel allows the inside and the outside of the motor housing 40 to communicate with each other through the coolant channel, and is located the inside of the bearing 45, which supports the motor housing 40. By using this coolant channel, the cooling performance of the electric motor 30 can be improved. In the example of the vehicle drive device 10, a part of the coolant channel is the pipes 51A and 51B. As shown in FIG. 3A, a through passage 31b is formed in the axle 31. The through passage 31b is located radially inward of the bearing 45 and extends in the axial direction. The pipes 51A and 51B extend through the through passage 31b. In the following, such through passage 31b is referred to as "axle through passage." The coolant channel includes, in part, the annular channel 32e extending in the circumferential direction around the axle 31 and disposed along the stator 33. The annular channel 32e can effectively cool the electric motor 30. In the example of the vehicle drive device 10, the annular channel 32e is formed in the stator mounting portion 32c of the stator frame 32. One ends of the pipes 51A and 51B are connected to the annular channel 32e.

The coolant channel includes a radiator (not shown) that releases the heat of the coolant to the outside air and a pump that extrudes the coolant. The radiator and the pumps are located further forward than the axle 31. The radiator is supported by a body frame, for example. The coolant channel includes a channel for sending the coolant from the radiator to the electric motor 30 (i.e., from the radiator to the annular channel 32e) and a channel for returning the coolant from the electric motor 30 to the radiator (i.e. from the annular channel 32e to the radiator) . In the example of the vehicle drive device 10, as shown in FIG. 3A, the pipe 51A is a feed pipe for sending the coolant from the radiator to the annular channel 32e, and the pipe 51B is a return pipe for returning the coolant from the annular channel 32e to the radiator.

The pipes 51A and 51B are formed of resin (e.g., polyethylene or polypropylene) or metal (e.g., stainless steel or steel), for example. The pipes 51A and 51B may be formed of a flexible material (e.g., rubber). A plurality of pipes connected in the longitudinal direction may be used as the feed pipe 51A and the return pipe 51B, respectively. The coolant may be water or dedicated oil, for example.

The structure of the coolant channel may not be limited to the example of the vehicle drive device 10. For example, a groove may be formed on the outer peripheral surface of the axle 31 so as to extend inside the bearing 45 in the axial direction of the axle 31. The pipes 51A and 51B may be disposed in such a groove. As another example, a cylindrical member may be fitted between the inner peripheral surface of the bearing 45 and the axle 31. A through hole or a groove for providing the pipes 51A and 51B therethrough may be formed in the cylindrical member. As yet another example, the through passage formed in the axle 31 may function as a coolant channel. In this case, the pipe extending from the radiator may be connected to one end of the through passage, and the other end of the through passage may be connected to the annular channel 32e via another pipe.

### [Axle through passage and pipe]

As described above, in the example of the vehicle drive device 10, the axle through passage 31b is formed in the axle 31, and the pipes 51A and 51B are provided inside the axle through passage 31b. This allows the coolant to be sent to the inside of the motor housing 40 with a simple structure. Further, the inside and the outside of the motor housing 40 communicate by the continuous pipe 51A and the continuous pipe 51B, and thus it is possible to reliably prevent a foreign substance from entering the coolant.

As shown in FIG. 3A, one opening end 31e of the axle through passage 31b is located outside of the motor housing 40. In the following, this opening end 31e is referred to as "external opening end." The external opening end 31e is located further leftward than the axle holder 72a of the rear arm 70. That is, the external opening end 31e is formed outward of the axle holder 72a in the axial direction. As such, the pipes 51A and 51B extend inside the bearing 45 and the axle holder 72a. In the example of the vehicle drive device 10, the external opening end 31e is formed in the end face of the axle 31. As such, the pipes 51A and 51B extend from the axle 31 to the radiator through the inside of the nut 39. Unlike the example of the vehicle drive device 10, the external opening end 31e may be formed in the outer peripheral surface of the axle 31.

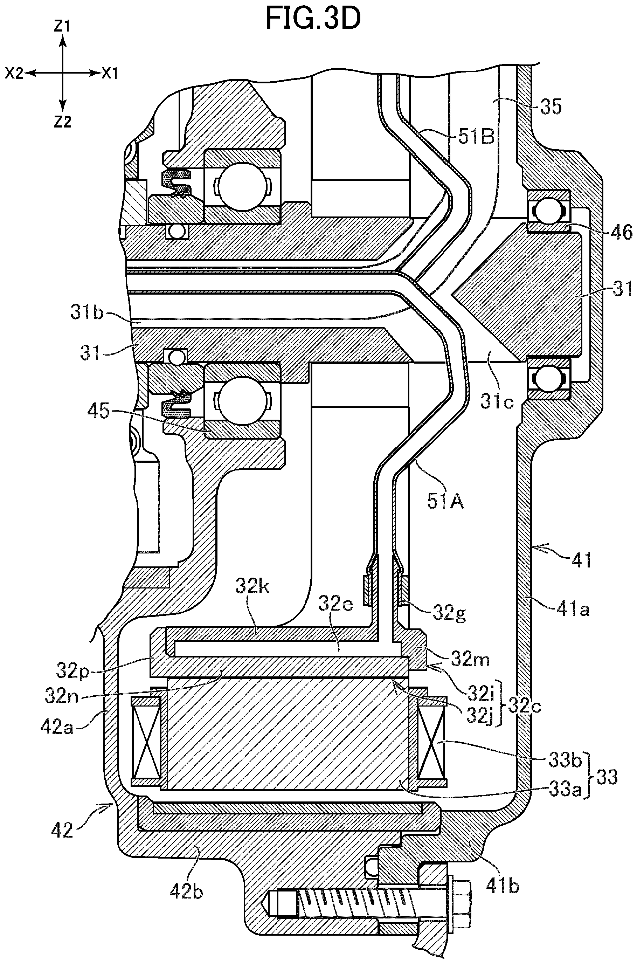

As shown in FIG. 3D, the other opening ends 31c and 31d of the axle through passage 31b are formed in the outer peripheral surface of the axle 31 and are located inside the motor housing 40. In the following, the opening ends 31c and 31d are referred to as "internal open end." The internal open ends 31c and 31d are located between the bearings 45 and 46 that are disposed apart from each other in the axial direction. As described above, the inner fixing portion 32a of the stator frame 32 is fixed to the outer peripheral surface of the axle 31. The internal open ends 31c and 31d are formed so as to avoid the inner fixing portion 32a.

As shown in FIGs. 3A and 3D, the bearing 45 is located to the left of the stator frame 32, and the axle holder 72a of the rear arm 70 is located further to the left of the bearing 45. The internal open ends 31c and 31d of the axial through passage 31b are formed in the opposite side of the bearing 45 in the axial direction across the stator frame 32, and are located between the stator frame 32 and the bearing 46. This arrangement of the internal open ends 31c and 31d allows the bearing 45 to be positioned further to the right. As a result, the axle holder 72a of the rear arm 70 can be extended toward the center of the axle 31 in the axial direction. This serves to improve the strength of the axle holder 72a to support the axle 31.

In the example of the vehicle drive device 10, the bearing 45 is located near the inner fixing portion 32a of the stator frame 32 and radially inward of the stator 33. That is, when viewed in the direction perpendicular to the axle 31, at least a part of the bearing 45 overlaps the stator 33. The inner fixing portion 32a and the connecting portion 32b of the stator frame 32 are offset to the right with respect to the center C1 of the rear wheel 20 in the axial direction. The positions of the bearing 45 and the stator frame 32 are not limited to the example of the vehicle drive device 10. For example, the inner fixing portion 32a of the stator frame 32 may be disposed at the center C1 of the rear wheel 20 and the electric motor 30.

In the example of the vehicle drive device 10, a recess open to the left is formed in the left wall 42a of the left housing 42. A brake device 61 is disposed in the recess. The axle through passage 31b and the pipes 51A and 51B are located radially inward of the brake device 61. The brake device 61 is a drum brake, for example, although may be other type of brake device (e.g., disc brake).

In the example of the vehicle drive device 10, two internal open ends 31c and 31d (see FIG. 3D) are formed in the axle 31. As shown in FIG. 3B, the feed pipe 51A and the return pipe 51B respectively extend from the internal open ends 31c and 31d radially toward the annular channel 32e. Connecting pipe portions (nipple portions) 32g and 32h (see FIG. 3A) communicating with the annular channel 32e are formed in the stator mounting portion 32c of the stator frame 32. The connecting pipe portions 32g and 32h radially project from the stator mounting portion 32c toward the axle 31. The feed pipe 51A and the return pipe 51B are respectively connected to the connecting pipe portions 32g and 32h.

As shown in FIG. 3B, one of the connecting pipe portions 32g and 32h is positioned higher than the axle 31, and the other is positioned lower than the axle 31. Such positions of the connecting pipe portions 32g and 32h allow the coolant to easily spread throughout the annular channel 32e, thereby improving the cooling performance. In the example of the vehicle drive device 10, the connecting pipe portions 32g and 32h are located on the opposite sides to each other across the axle 31. More specifically, the connecting pipe portion 32g extends upward from the lowermost part of the annular channel 32e. On the other hand, the connecting pipe portion 32h extends downward from the uppermost part of the annular channel 32e.

As shown in FIG. 3D, the internal open end 31c is formed at the lowermost part of the outer peripheral surface of the axle 31 in accordance with the position of the connecting pipe portion 32g. The feed pipe 51A extends downward from the internal open end 31c to connect to the connecting pipe portion 32g. Similarly, the internal open end 31d is formed at the uppermost part of the outer peripheral surface of the axle 31 in accordance with the position of the connecting pipe portion 32h. The return pipe 51B extends upward from the internal open end 31d to connect to the connecting pipe portion 32h. Further, similarly to the internal open ends 31c and 31d, the connecting pipe portions 32g and 32h are offset to the right with respect to the center C1 of the rear wheel 20. This can simplify the layout of the pipes 51A and 51B.

The axial through passage 31b has two passages extending obliquely toward the outer peripheral surface of the axle 31 near the internal open ends 31c and 31d. This structure facilitates insertion of the pipes 51A and 51B into the axial through passage 31b.

The positions of the connecting pipe portions 32g and 32h and the positions of the internal open ends 31c and 31d are not limited to the example of the vehicle drive device 10. For example, both of the connecting pipe portions 32g and 32h may extend upward from the lowermost part of the annular channel 32e. In this case, the annular channel 32e may be divided into two channels. That is, the annular channel 32e may be divided into a channel connecting to the connecting pipe portion 32g and a channel connecting to the connecting pipe portion 32h. These two channels may be connected to each other at their uppermost parts. In this case, the feed pipe 51A and return pipe 51B may exit a common internal open end and extend toward the connecting pipe portions.

### [Annular channel]

As described above, the annular channel 32e is formed in the stator frame 32. More specifically, the annular channel 32e is formed in the stator mounting portion 32c of the stator frame 32. This structure can reduce a distance between the stator 33 and the coolant. As a result, heat from the stator 33 can be efficiently transferred to the coolant.

In the example of the vehicle drive device 10, the stator mounting portion 32c is located radially inward the stator 33, and thus the annular channel 32e is also located radially inward the stator 33. That is, the annular channel 32e is provided by using a space secured inside the stator 33. In other words, the annular channel 32e can be provided without changing the diameter of the electric motor 30.

As shown in FIG. 3D, the stator mounting portion 32c has a main body 32i connected to the outer peripheral portion of the connecting portion 32b extending radially and a cover 32j attached to the inner peripheral surface of the stator 33. The main body 32i and the cover 32j are separately formed members. The main body 32i and the cover 32j are combined with each other, and the annular channel 32e is formed therebetween. More specifically, the main body 32i has an annular inner wall 32k and a side wall 32m formed at the edge of the inner wall 32k. The cover 32j has an outer wall 32n radially opposed to the inner wall 32k of the main body 32i and a side wall 32p opposed to the side wall 32m of the main body in the axial direction. These four walls 32k, 32m, 32n, and 32p form the annular channel 32e having a rectangular cross-section.

The annular channel 32e is formed over the entire circumference of the axle 31 in the circumferential direction. In other words, as shown in FIG. 3B, the annular channel 32e surrounds the axle 31 in 360 degrees. As such, it is possible to effectively cool the electric motor 30.

In the example of the vehicle drive device 10, the stator mounting portion 32c has a slightly larger width than the iron core 33a of the stator 33 in the axial direction. As such, the annular channel 32e formed inside the stator mounting portion 32c can have a width corresponding to the iron core 33a in the axial direction. In other words, the annular channel 32e has substantially the same width as the iron core 33a in the axial direction.

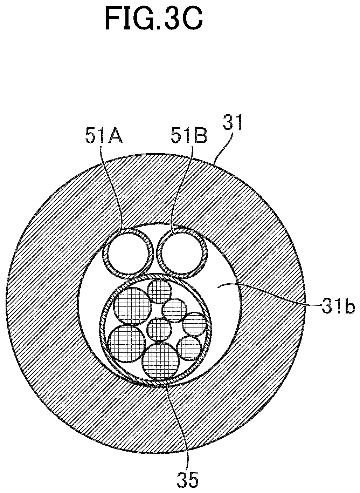

The structure of the annular channel 32e may not be limited to the example of the vehicle drive device 10 shown in FIG. 3. As will be described later, the annular channel may not be formed in the stator frame 32 itself, and the pipes 51A and 51B may extend along the inner peripheral surface of the stator mounting portion 32c so as to form an annular channel. As another example, the annular channel 32e may be formed in a member that is different from the stator frame 32 and is dedicated to the annular channel 32e. As yet another example, the annular channel does not have to be located radially inward of the stator 33. For example, if the electric motor 30 is an axial gap electric motor, the annular channel may be provided on the side of the stator.

### [Arrangement of electric cable]

As shown in FIG. 3A, an electric cable 35 is connected to the electric motor 30. The electric cable 35 includes a plurality of electric wires connected to the coil 33b of the stator 33. The electric cable 35 may include an electric wire connected to a sensor for detecting the rotational speed of the electric motor 30. Similarly to the pipes 51A and 51B, the electric cable 35 is located radially inward of the bearing 45, and extends from the electric motor 30 to the outside of the motor housing 40.

In the example of the vehicle drive device 10, as shown in FIG. 3C, the electric cable 35 and the pipes 51A and 51B are disposed on the common axle through passage 31b. According to this structure, for example, the axle 51 can be formed in a simplified manner compared with the structure in which the exclusive through passage for the electric cable 35 is formed in the axle 31 in addition to the axle through passage 31b for the pipes 31A and 51B. In the example of the vehicle drive device 10, the pipes 51A and 51B are thinner than the electric cable 35. Unlike the example of the vehicle drive device 10, the pipes 51A and 51B may be thicker than the electric cable 35.

Unlike the example of the vehicle drive device 10, a groove extending in the axial direction may be formed in the outer peripheral surface of the axle 31. The electric cable 35 may be disposed in such a groove. As another example, a cylindrical member may be fitted between the inner peripheral surface of the bearing 45 and the axle 31. A through hole through which the electric cable 35 is provided may be formed in the cylindrical member. In this case, a through hole through which the electric cable 35 is provided and a through hole through which the pipes 51A and 51B are provided may be formed in the cylindrical member.

### [Side housing]

As shown in FIG. 3A, the electric cable 35 and the pipes 51A and 51B extend in the same direction from the inside of the motor housing 40. In the example of the vehicle drive device 10, the electric cable 35 and the pipes 51A and 51B extend from the inside of the motor housing 40 to the left, and extend from the axle 31 to the left. According to this structure, supporting and protecting the electric cable 35 and the pipes 51a and 51b outside the motor housing 40 can be made common.

In the example of the vehicle drive device 10, the electric cable 35 and the pipes 51A and 51B extend to where the rear arm 70 is located (specifically, the left side). A side housing 70H is formed on the left side of the motor housing 40. The side housing 70H is formed in the rear part of the left arm 71 and moves up and down together with axle 31 with respect to the body frame. The external opening end 31e of the axle through passage 31b is located inside of the side housing 70H. This structure prevents water and soil from entering the motor housing 40 through the axle through passage 31b. This structure can protect the pipes 51A and 51B and the electric cable 35. Further, the side housing 70H is a part of the rear arm 70, and thus the number of parts can be reduced.

As shown in FIG. 3A, in the example of the vehicle drive device 10, the side housing 70H includes an arm rear member 72 and a cover member 73. The arm rear member 72 is a box-like member with the left side open. The cover member 73 is located to the left of the arm rear member 72, and closes the opening of the arm rear member 72. The arm rear member 72 and the cover member 73 are joined in the left-right direction. In other words, the left edge of the arm rear member 72 and the right edge of the cover member 73 are fixed to each other by fixtures such as screws and bolts. The axle holder 72a is formed on the arm rear member 72.

As shown in FIG. 2, the left arm 71 has an arm front member 75 formed in a cylindrical shape. The pipes 51A and 51B extend to the radiator through the inside of the side housing 70H and the inside of the arm front member 75, for example. The electric cable 35 extends forward through the inside of the side housing 70H and the inside of the arm front member 75. The electric cable 35 is connected to a controller (inverter) that outputs driving power to be supplied to the electric motor 30. The controller is connected to a battery through another cable. Other electric parts, such as a controller (inverter), may be disposed in the side housing 70H.

### [Other examples]

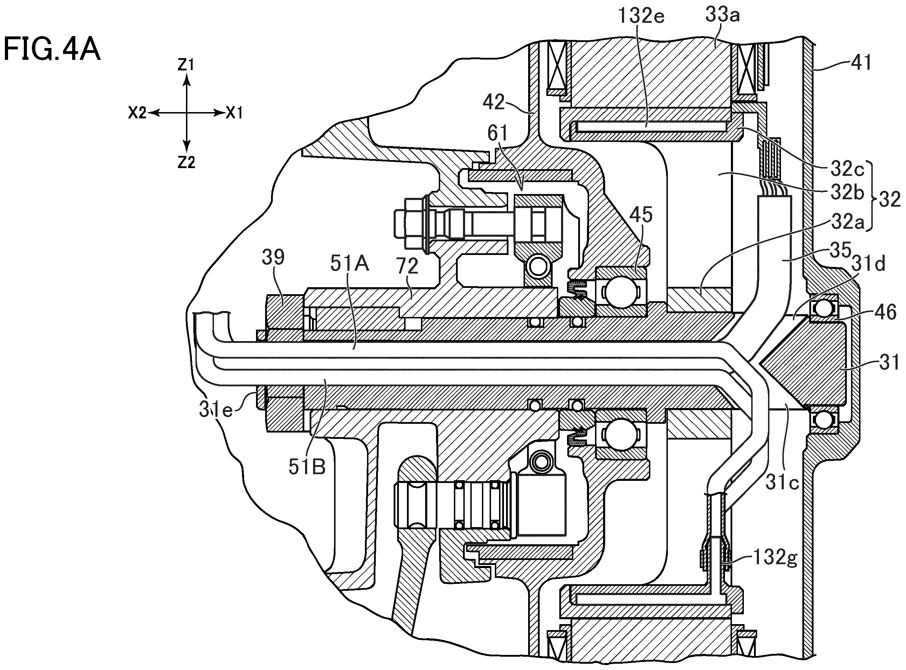

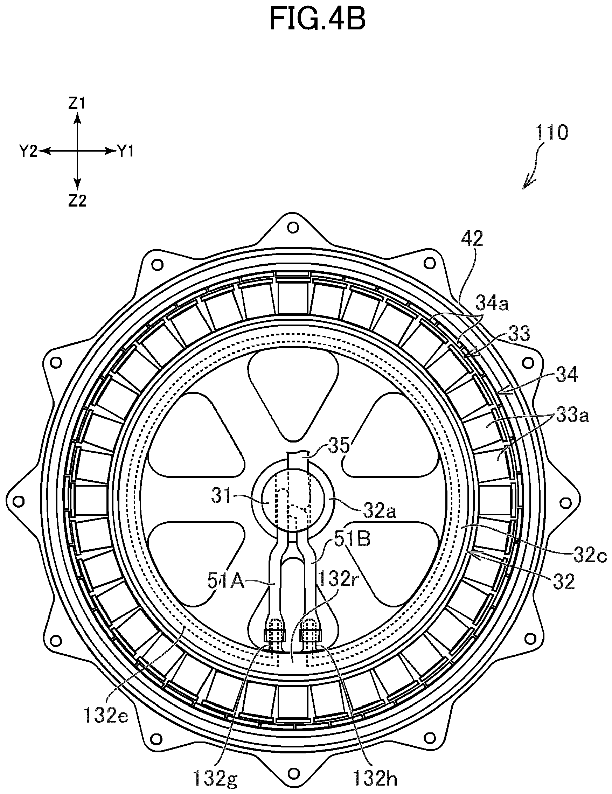

FIGs. 4A and 4B are cross-sectional views showing another example of the vehicle drive device proposed in the present disclosure. Regarding the elements (members and parts) of the vehicle drive device 110 shown in FIGs. 4A and 4B, the same elements as those of the vehicle drive device 10 shown in FIGs. 3A to 3D are denoted by the same reference numerals as in FIGs. 3A to 3D. In the following, the description focuses on differences from the vehicle drive device 10 illustrated in FIGs. 3A to 3D, and items that are not described are the same as those of the vehicle drive device 10.

As shown in FIG. 4B, in the vehicle drive device 110, the stator mounting portion 32c of the stator frame 32 has a connecting pipe portion 132g for sending the coolant to the annular channel 32e and a connecting pipe portion 132h for returning the coolant to the radiator. The connecting pipe portions 132g and 132h are positioned in the same direction with respect to the axle 31. Specifically, the connecting pipe portions 132g and 132h are positioned lower than the axle 31. More specifically, the connecting pipe portions 132g and 132h are positioned near the lowermost part of the stator mounting portion 32c. The stator mounting portion 32c has a partition portion 132r between the two connecting pipe portions 132g and 132h. As such, the annular channel 32e formed in the stator mounting portion 132c extends from one connecting pipe portion 312g to the other connecting pipe portion 132h via the upper part of the stator mounting portion 32c.

As shown in FIG. 4A, the vehicle drive device 110 has a feed pipe 51A and a return pipe 51B extending through the axle through passage 31b formed in the axle 31. The pipes 51A and 51B extend in the same direction from the internal open end 31c of the axial through passage 31b formed in the axle 31. That is, the pipes 51A and 51B extend downward from the internal open end 31c of the axle through passage 31b formed in the axle 31. The pipes 51A and 51B are respectively connected to the connecting pipe portions 132g and 132h.

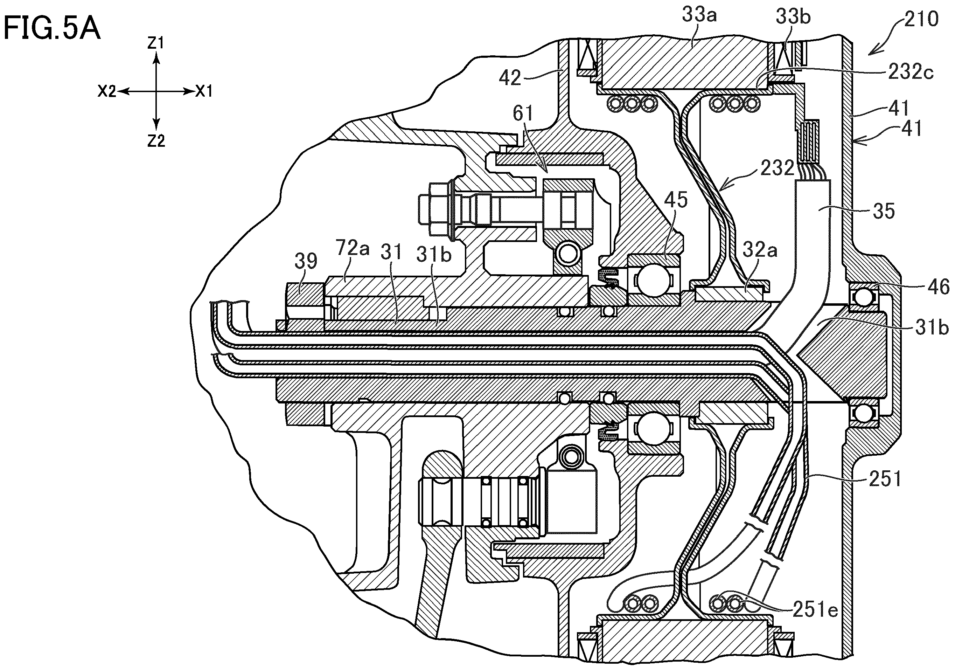

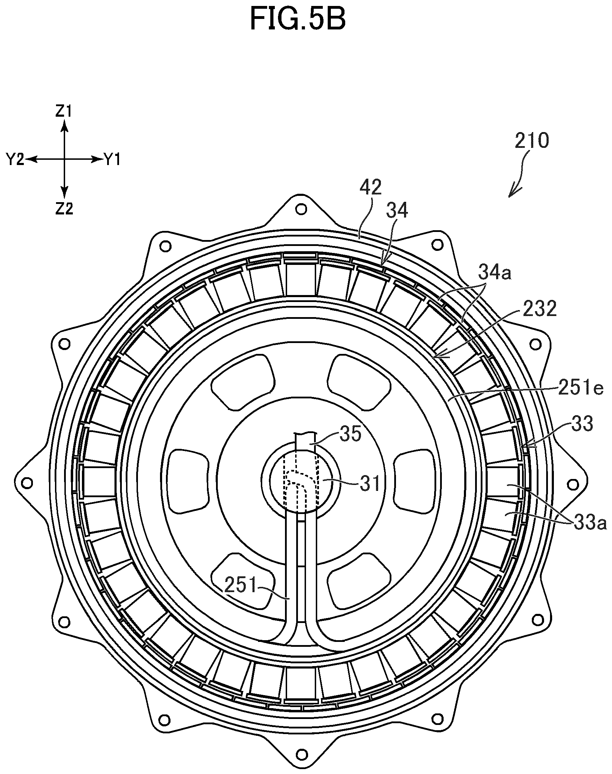

FIGs. 5A and 5B are cross-sectional views showing another example of the vehicle drive device proposed in the present disclosure. Regarding the elements (members and parts) of the vehicle drive device 210 shown in FIGs. 5A and 5B, the same elements as those of the vehicle drive device 10 shown in FIGs. 3A to 3D are denoted by the same reference numerals as in FIGs. 3A to 3D. In the following, the description focuses on differences from the vehicle drive device 10 illustrated in FIGs. 3A to 3D, and items that are not described are the same as those of the vehicle drive device 10.

As shown in FIG. 5A, the vehicle drive device 210 has a pipe 251 that extends through the axle through passage 31b formed in the axle 31 and serves as a coolant channel. The pipe 251 includes an annular pipe 251e as the annular channel described above. The annular pipe 251e is formed along the stator 33 and extends in the circumferential direction of the axle 31. Specifically, the annular pipe 251e is disposed radially inward of the stator 33 and extends along the inner peripheral surface of the stator 33. In the vehicle drive device 210 as well, the stator 33 is attached to the outer peripheral surface of the stator mounting portion 232c of the stator frame 32. The annular pipe 251e is in contact with the inner peripheral surface of the stator mounting portion 232c. The annular channel 32e is not formed in the stator mounting portion 232c. The vehicle drive device 210 can simplify the structure of the stator frame 232 compared to the stator frame 32 in which the annular channel 32e is formed.

The pipe 251 circles around the axle 31 multiple times after leaving the internal open end 31c of the axle 31. For this reason, as shown in FIG. 5A, the plurality of annular pipes 251e are disposed in the axial direction. The plurality of annular pipes 251e arranged in the axial direction preferably have a total width corresponding to the stator 33 in the axial direction. More specifically, the plurality of annular pipes 251e arranged in the axial direction preferably have a total width corresponding to the iron core 33a of the stator 33 in the axial direction. The pipe 251 returns from the annular pipes 251e to the internal open end 31c and the axle through passage 31b. The pipe 251 also has a radiator and a pump.

The annular pipes 251e may be pressed against the inner peripheral surface of the stator mounting portion 232c. The annular pipes 251e are, for example, metal pipes. In this case, the annular pipes 251e are slightly shortened radially inward and placed inside the stator mounting portion 232c. In this way, the annular pipes 251e are pressed against the inner peripheral surface of the stator mounting portion 232c.

The pipe 251 may be formed of a plurality of connected pipes of different materials. That is, the pipe 251 may be formed by connecting a pipe formed of resin and a pipe formed of metal. For example, the annular pipes 251e may be formed of metal, and a part thereof disposed inside the axle through passage 31b of the axle 31 may be formed of resin.

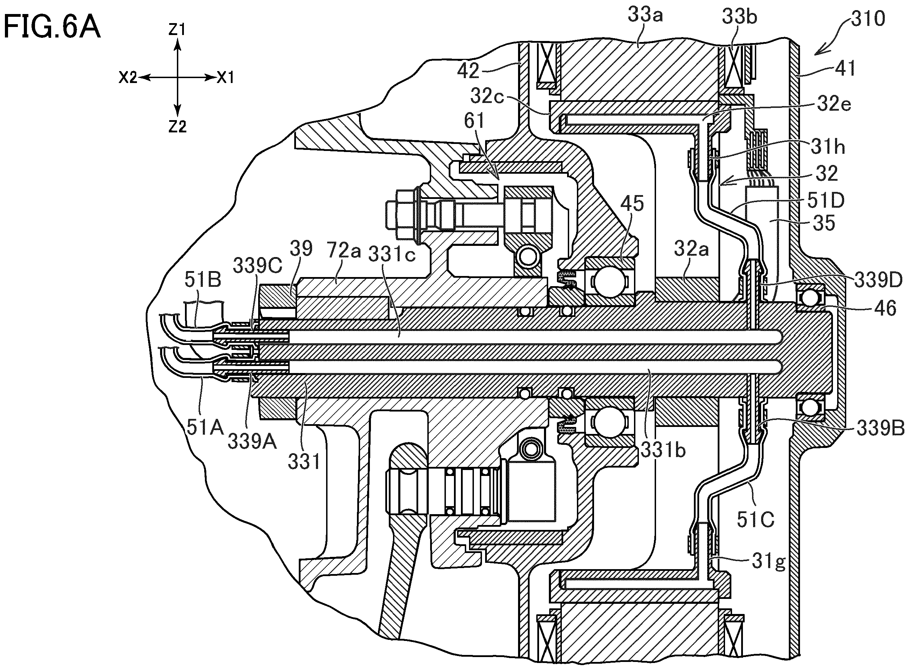

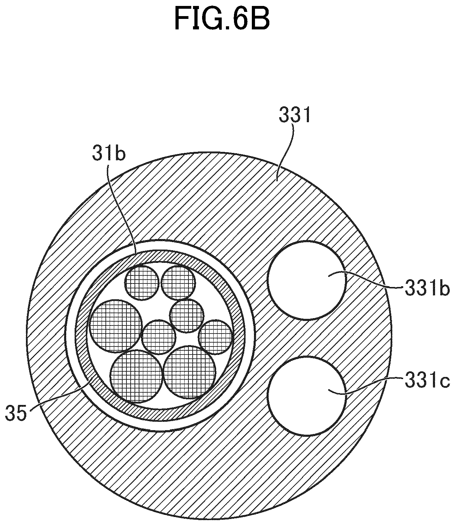

FIGs. 6A and 6B are cross-sectional views showing another example of the vehicle drive device proposed in the present disclosure. Regarding the elements (members and parts) of the vehicle drive device 310 shown in FIGs. 6A and 6B, the same elements as those of the vehicle drive device 10 shown in FIGs. 3A to 3D are denoted by the same reference numerals as in FIGs. 3A to 3D. In the following, the description focuses on differences from the vehicle drive device 10 illustrated in FIGs. 3A to 3D, and items that are not described are the same as those of the vehicle drive device 10.

In the vehicle drive device 310, a feed channel 331b and a return channel 331c are formed in the axle 331 instead of the axle through passage 31b described above. In other words, the through passage itself functions as the channels 331b and 331c. This eliminates the need of providing a pipe through the through passage31b, and thus serves to simplify the assembly work of the vehicle drive device 310. The channels 331b and 331c extend in the axial direction of the axle 331, are located radially inward of the bearing 45, and are located radially inward of the shaft holding portion 72a of the rear arm 70. As shown in FIG. 6B, an axle through passage 331d is formed in the axle 331. The electric cable 35 extends through the through passage 331d.

One opening end (external opening end located outside the motor housing 40) of the feed channel 331b is connected to the feed pipe 51A. For example, a connecting pipe 339A is fitted to the external opening end, and the feed pipe 51A is connected to the connecting pipe 339A. The other open end (external opening end located inside the motor housing 40) of the feed channel 331b is connected to the connecting pipe portion 32g through the pipe 51C. For example, a connecting pipe 339B is fitted to the internal open end of the feed channel 331b, and the pipe 51C is connected to the connecting pipe 339B.

One opening end (external opening end positioned outside the motor housing 40) of the return channel 331c is connected to the return pipe 51B. For example, a connecting pipe 339C is fitted to the external opening end, and the return pipe 51B is connected to the connecting pipe 339C. The other open end (external opening end located inside the motor housing 40) of the return channel 331c is connected to the connecting pipe portion 32h through the pipe 51D. For example, a connecting pipe 339D is fitted to the internal open end of the return channel 331c, and the pipe 51D is connected to the connecting pipe 339D.

The coolant exits the radiator and flows through the feed pipe 51A, the feed channel 331b, and the pipe 51C into the annular channel 32e. After flowing through the annular channel 32e, the coolant flows through the pipe 51D, the return channel 331c, and the return pipe 51B, and returns to the radiator.

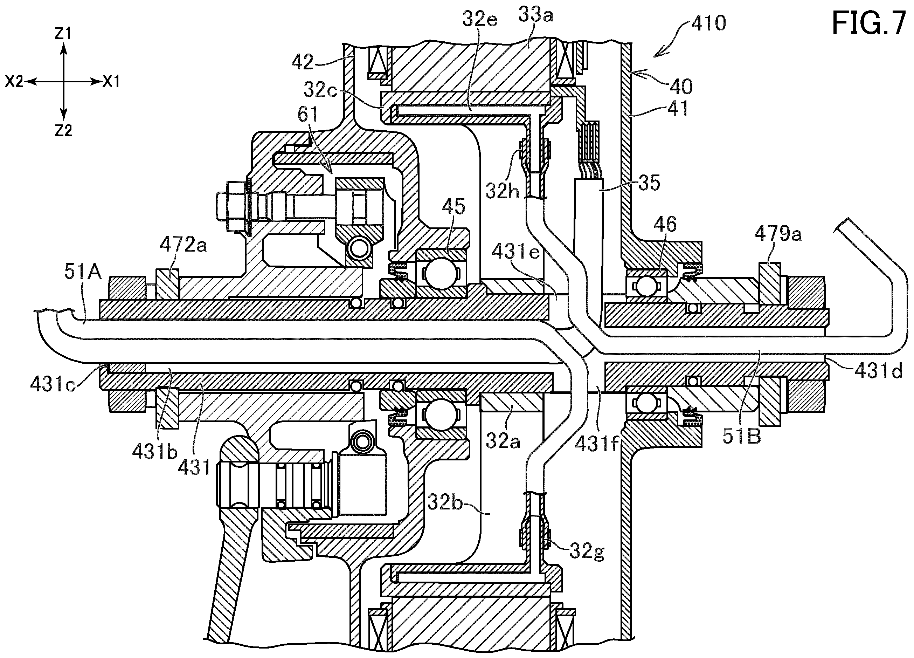

FIG. 7 is a cross-sectional view showing another example of the vehicle drive device proposed in the present disclosure. Regarding the elements (members and parts) of a vehicle drive device 410 shown in FIG. 7, the same elements as those of the vehicle drive device 10 shown in FIGs. 3A to 3D are denoted by the same reference numerals as in FIGs. 3A to 3D. In the following, the description focuses on differences from the vehicle drive device 10 illustrated in FIGs. 3A to 3D, and items that are not described are the same as those of the vehicle drive device 10.

The vehicle drive device 410 includes an axle 431. The vehicle drive device 410 has a rear arm including a left arm disposed on the left side of the rear wheel 20 and a right arm disposed on the right side of the rear wheel 20. As shown in FIG. 7, the left portion of the axle 431 is supported by the axle holder 472a which is a rear part of the left arm, and the right portion of the axle 431 is supported by the axle holder 479a which is a rear part of the right arm.

An axle through passage 431b is formed in the axle 431. The axle through passage 431b has two external opening ends as opening ends located outside of the motor housing 40. That is, the axle through passage 431b has an external opening end 431c that opens to the left of the axle 431 and an external opening end 431d that opens to the right of the axle 431. The axle through passage 431b extends from the opening ends 431e and 431f, which are located inside the motor housing 40, to the external opening end 431c on the left and is located radially inward of the left bearing 45 and radially inward of the axle holder 472a. Further, the axle through passage 431b extends from the opening ends 431e and 431f located inside the motor housing 40 to the external opening end 431d on the right, and is located radially inward of the right bearing 46 and radially inward of the axle holder 479a.

The feed pipe 51A is connected to the connecting pipe portion 32g of the stator mounting portion 32c in which the annular channel 32e is formed. The feed pipe 51A enters the axial through passage 431b from the internal open end 431f, and exits the axial through passage 431b from one external opening end (in the example of FIG. 7, the left external opening end 431c). The return pipe 51B is connected to the connecting pipe portion 32h of the stator mounting portion 32c. The return pipe 51B enters the axial through passage 431b from the internal open end 431e, and exits the axial through passage 431b from the other external opening end (in the example of FIG. 7, the right external opening end 431d). On the contrary to the example of FIG. 7, the feed pipe 51A may exit the axle through passage 431b from the right external opening end 431d, and the return pipe 51B may exit the axle through passage 431b from the left external opening end 431c.

The electric cable 35 extends from the inside to the outside of the motor housing 40 through the axle through passage 431b. In the example of FIG. 7, the electric cable 35, together with the feed pipe 51A, exits the axle through passage 431b from the left external opening end 431c.

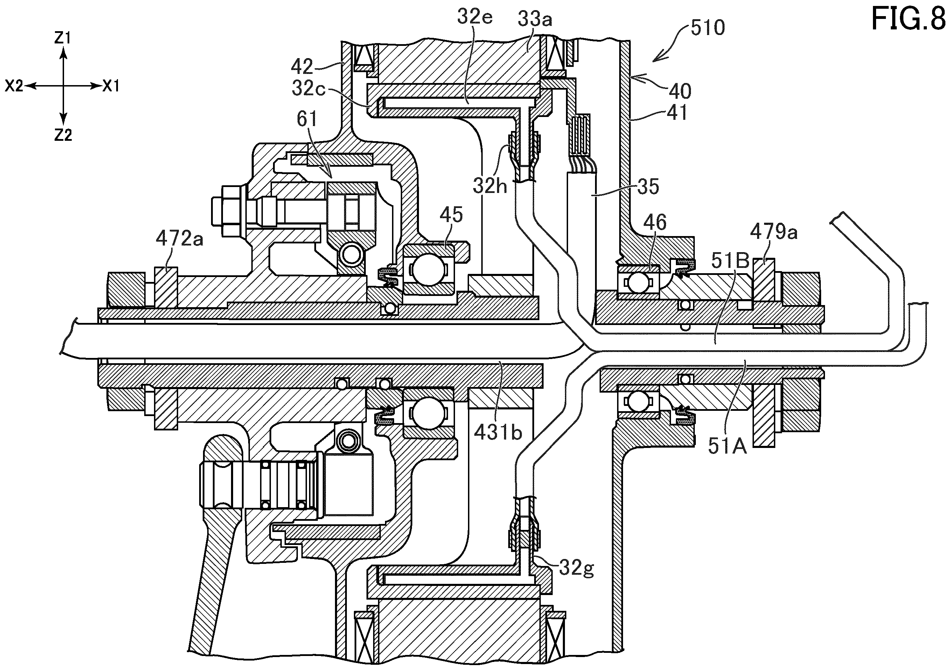

FIG. 8 is a cross-sectional view showing still another example of the vehicle drive device proposed in the present disclosure. Regarding the elements (members and parts) of a vehicle drive device 510 shown in FIG. 8, the same elements as those of the vehicle drive device 410 shown in FIG. 7 are denoted by the same reference numerals as in FIG. 7. In the following, the description focuses on differences from the vehicle drive device 410 illustrated in FIG. 7, and items that are not described are the same as those of the vehicle drive device 410.

In the vehicle drive device 510, similarly to the vehicle drive device 410, the right part and the left part of the axle 431 are supported by the rear arm. In the vehicle drive device 510, the two pipes 51A and 51B extend in the same direction, which is opposite to the extending direction of the electric cable 35. Specifically, the pipes 51A and 51B extend rightward from the inside of the motor housing 40 through the axle through passage 431b. On the other hand, the electric cable 35 extends leftward from the inside of the motor housing 40 through the axle through passage 431b.

The vehicle drive devices 410 and 510 shown in FIGs. 7 and 8 each do not include a side housing located in the lateral direction from the motor housing 40, although may include a side housing 70H located in the lateral direction from the motor housing 40 similarly to the vehicle drive device 10 shown in FIG. 3A. In this case, the side housing 70H may be disposed on the right side and the left side of the motor housing 40. The left side housing 70H may cover the left part of the axle 431 and the external opening end 431c. The right side housing 70H may cover the right part of the axle 431 and the external opening end 431d.
(1) The vehicle drive devices 10, 110, 210, 310, 410, and 510 includes the axles 31, 331, and 431, the electric motor 30 including the stator 33 fixed to the axles 31, 331, and 431 and the rotor 34 rotatable about the axles 31, 331, and 431, the bearing 45 fitted radially outward of the axles 31, 331, and 431, the motor housing 40 that is supported by the axles 31, 331, and 431 via the bearing 45 so as to be rotatable about the axles 31, 331, and 431, is rotatable together with the rotor 34 about the axles 31, 331, and 431, and contains the electric motor 30, and the coolant channels 51A, 51B, 251, 331b, and 331c that are located radially inward the bearing 45 and allow the outside the motor housing 40 and the inside of the motor housing 40 to communicate with each other through the coolant channel. The vehicle drive devices 10, 110, 210, 310, 410, and 510 can effectively cool the electric motor 30.
(2) The coolant channels 51A, 51B, 251, 331b, and 331c are formed or disposed on the axles 31 and 331. This allows the coolant to be sent to the inside of the motor housing 40 with a simple structure.
(3) The axle 31 has the through passage 31b extending in the axial direction of the axle 31 and penetrating the axle 31. The coolant channels 51A, 51B, and 251 are pipes disposed in holes or grooves. This structure eliminates the need of connecting the channel formed in the axle to the pipe. Alternatively, the axle 31 may have a groove extending in the axial direction of the axle 31 and formed in the outer peripheral surface of the axle 31. The pipes as the coolant channels 51A, 51B, and 251 may be disposed in this groove.
(4) The coolant channel includes the annular channels 32e and 251e extending in the circumferential direction around the axle and disposed along the stator 33. This structure serves to more effectively cool the electric motor 30.
(5) The annular channels 32e and 251e are radially located on the inside the stator 33. With this structure, a space inside the stator 33 can be effectively used.
(6) The stator 33 is fixed to the axle 31 through the stator frame 32 disposed radially inward of the stator 33, and the annular channel 32e is formed in the stator frame 32. This structure serves to effectively transfer heat from the stator 33 to the coolant.
(7) The annular channel 251e is a pipe extending in the circumferential direction around the axle 31 and extending along the stater. This can simplify the structure of members for supporting the stator 33, such as the stator frame 32.
(8) The electric cable 35 connected to the stator 33 is located radially inward of the bearing 45 in addition to the coolant channels 51A, 51B, 251, 331b, and 331c.
(9) The axles 31 and 331 has holes 31b and 331d therethrough extending in the axial direction of the axles 31 and 331. The electric cable 35 is arranged in the holes 31b and 331d. This allows the electric cable 35 to be connected to the stator 33 with a simple structure. A groove may be formed on the outer peripheral surface of the axles 31 and 331 and the electric cable 35 may be arranged in such a groove.
(10) The coolant channels 51A, 51B, 251, 331b, and 331c extend in the same direction as the electric cable 35 from the inside of the motor housing 40 along the axles 31 and 331. This structure allows the coolant channels 51A, 51B, 251, 331b, and 331c and the electric cable 35 to be disposed on the same side (right side or left side) with respect to the wheel. As a result, the structure for supporting these members can be made common.
(11) The coolant channels 51A, 51B, and 251 are pipes, and the pipes 51A, 51B, and 251 and the electric cable 35 are disposed in the same hole 31b formed in the axle 31. With this structure, the axle can be easily formed compared to the case where a hole for a pipe is formed separately from a hole for an electric cable.
(12) The electric cable 35 may extend from the inside of the motor housing 40 in the direction along the axle 431, and the coolant channels 51A and 51B may extend from the inside of the motor housing 40 in the opposite direction to the electric cable 35 along the axle 431. This structure serves to reduce the diameter of the hole formed in the axle 431.
(13) The vehicle drive device includes the rear arm 70 supporting the axles 31, 331, and 431, at least a part of the coolant channel is a pipe, and the rear arm 70 includes the side housing 70H for containing the pipe. With this structure, the side housing 70H protects the pipe.
(14) The axles 31, 331, and 431 may have a portion located outside the motor housing 40 and inside the side housing 70H in the direction along the axles 31, 331, and 431, and the coolant channels 51A, 51B, and 251 may pass through the portion of the axles 31, 331, and 431. This structure can prevent water and soil from entering the motor housing 40 through the hole or the groove formed in the axles 31, 331, and 431.
(15) The electric vehicle including the vehicle drive devices 10, 110, 210, 310, 410, and 510 can effectively cool the electric motor 30.

### [Modifications]

The vehicle drive device proposed in this disclosure is not limited to the vehicle drive devices 10, 110, 210, 310, 410, and 510 described above.

For example, different members may be prepared for the stator frame 32 and the annular pipe 251e. The annular channel may be formed in these different members.

An insulating material may be used as the coolant. In this case, the coolant may be dispersed from the coolant channel into the motor housing 40.

## Claims

1. An electric vehicle drive device comprising:
an axle;
an electric motor including a rotor and a stator, the rotor rotatable about the axle;
a bearing fitted radially outward of the axle;
a motor housing that is supported by the axle via the bearing so as to be rotatable about the axle, is rotatable together with the rotor, and contains the electric motor; and
a coolant channel located radially inward of the bearing and allowing an outside of the motor housing and an inside of the motor housing to communicate with each other through the coolant channel.

2. The electric vehicle drive device according to claim 1, wherein
the coolant channel is formed or disposed in the axle.

3. The electric vehicle drive device according to claim 1, wherein
the axle has a hole therethrough extending in an axial direction of the axle or a groove formed in an outer peripheral surface of the axle and extending in the axial direction of the axle, and
the coolant channel is a pipe disposed in the hole or the groove.

4. The electric vehicle drive device according to any one of claims 1 to 3, wherein
the coolant channel includes an annular channel extending in a circumferential direction around the axle and disposed along the stator.

5. The electric vehicle drive device according to claim 4, wherein
the annular channel is radially located on an inside of the stator.

6. The electric vehicle drive device according to claim 4 or 5, wherein
the stator is fixed to the axle via a stator frame disposed radially inward of the stator, and
the annular channel is formed in the stator frame.

7. The electric vehicle drive device according to claim 4 or 5, wherein
the annular channel is a pipe extending in the circumferential direction around the axle and extending along the stator.

8. The electric vehicle drive device according to any one of claims 1 to 7, wherein
an electric cable connected to the stator is located radially inward of the bearing in addition to the coolant channel.

9. The electric vehicle drive device according to claim 8, wherein
the axle has a hole therethrough extending in the axial direction of the axle or a groove formed in an outer peripheral surface of the axle and extending in the axial direction of the axle, and
the electric cable is disposed in the hole or the groove.

10. The electric vehicle drive device according to claim 8, wherein
the coolant channel and the electric cable extend in a same direction from the inside of the motor housing along the axle.

11. The electric vehicle drive device according to claim 10, wherein
the coolant channel is a pipe, and
the pipe and the electric cable are disposed in a common hole or groove formed in the axle.

12. The electric vehicle drive device according to claim 9, wherein
the electric cable extends from the inside of the motor housing in the direction along the axle, and
the coolant channel extends from the inside of the motor housing along the axle in a direction opposite to the electric cable.

13. The electric vehicle drive device according to any one of claims 1 to 12, further comprising a rear arm supporting the axle, wherein
at least a part of the coolant channel is a pipe, and the rear arm includes a side housing for containing the pipe.

14. The electric vehicle drive device according to claim 13, wherein
the axle includes a part, the part being located outside the motor housing in the direction along the axle and inside the side housing, and
the coolant channel extends through the part of the axle.

15. An electric vehicle comprising the drive device according to any one of claims 1 to 14.
